# EUROPEAN PATENT APPLICATION

(11) **EP 1 892 976 A2**
(43) Date of publication of application: **27.02.2008**
(21) Application number: 07110915.1
(22) Date of filing: 22.06.2007
(51) Int. Cl.: H04Q 7/36, H04L 12/56

(54) **Radio base station**

(30) Priority: 21.08.2006 JP 2006224679
(71) Applicant: Fujitsu Ltd., Kawasaki-shi, Kanagawa 211-8588 (JP)
(72) Inventor: Suga, Junichi, Kawasaki-shi, Kanagawa 211-8588 (JP)
(74) Representative: Wilding, Frances Ward

(57) **Abstract**

A radio base station (BS) for transmitting data to a plurality of radio terminals (T4-1 - T4-5) via a relay station (RS) for transmitting a first data unit by applying the common radio communication scheme to the first data unit including data to a plurality of said radio terminals, having a control unit for controlling a transmission processing unit to generate a second data unit including data to a plurality of the radio terminals included in the first data unit and then transmitting the second data unit to the relay station.

## Description

### CROSS REFERENCE TO RELATED APPLICATION

This application is related to and claims priority to Japanese Application No. 2006-224679 filed August 21, 2006 in the Japanese Patent Office, the contents of which are incorporated by reference herein.

### BACKGROUND OF THE INVENTION

### 1. Field of the Invention

The present invention relates to a radio base station conducting radio communication. The present invention is suitable for additional use of a relay station, for example, on the basis of the radio communication system conforming to IEEE 802.16.

### 2. Description of the Related Art

A radio communication system using a radio communication path, for example WCDMA, CDMA2000 or the like, is now spreading throughout the world. In such a radio communication system, a plurality of radio base stations are provided for service areas and radio terminals are capable of communicating with the other communication devices (communication terminals) through any of the radio base stations. Moreover, in such a system, a service area formed by a base station is overlapped with another service area formed by an adjacent base station. Therefore the communication can be maintained by a handover process even though the radio environment of the communication gets worse.

Moreover, as a radio communication system, the technologies, for example, code division multiplex, time division multiplex, frequency multiplex and OFDM (OFDMA) are generally employed and thereby a plurality of radio terminals can be connected to a radio base station simultaneously.

However, when a radio terminal is close to the boundary of a service area formed by a base station even within the service area, high-speed communication becomes difficult for the radio terminal because the radio communication environment is deteriorated.

Therefore, a communication system has been proposed, in which a relay station is provided within the service area of a radio base station to realize radio communications between a radio terminal and the radio base station via the relay station.

Particularly, introduction of such relay station (RS) is now discussed in the task group of the IEEE 802.16j.

Matters of the IEEE802.16 explained above are disclosed in the IEEE Std802.16TM-2004, and the IEEE Std802.16eTM-2005.

### SUMMARY OF THE INVENTION

According to the background explained above, a radio terminal is capable of communicating with a radio base station directly or via a relay station.

However, for this purpose, control is required for a couple of sections for radio communication such as a communication between a radio base station and a relay station and a communication between a relay station and a radio terminal. In this case, when such control is completely executed independently, the load of a relay station may increase or a problem may occur in the relay process.

Therefore, one of the objects of the present invention is to realize radio communication between a radio base station and a relay station by taking communication between a relay station and a radio terminal into account.

Moreover, another object is to provide adequate correspondence between data transmitted and received between a radio base station and a relay station and data transmitted and received between a relay station and a radio terminal.

Moreover, it is also another object of the present invention to obtain any advantage leading from any of the following embodiments but that cannot be obtained using the prior art.

The present invention utilizes a radio base station transmitting data to a plurality of radio terminals via a relay station which transmits a first data unit by applying a common radio communication scheme to the first data unit including data to a plurality of the radio terminals, comprising a control unit operable to generate a second data unit including said data to said plurality of radio terminals and control a transmission processing unit to transmit the second data unit to the relay station.

Preferably the radio communication scheme is any of a modulation scheme, a coding scheme, and a coding rate.

Preferably the control unit controls a radio communication scheme for transmission of said first data unit independently of a radio communication scheme for transmission of said second data unit.

Preferably said first data unit and said second data unit have an identical content or format.

The present invention utilizes a radio base station transmitting a first communication parameter to a radio terminal and transmitting data, to be received by the radio terminal based on the communication parameter, to a relay station, comprising a control unit operable to control transmission of a second communication parameter having the same content as the first communication parameter to the relay station wherein the second communication parameter is correlated with the data or to control transmission of information for identifying the first communication parameter wherein the information is correlated with the data.

The present invention utilizes a radio base station transmitting a first communication parameter, allowing a relay station to receive data transmitted on a basis of the first parameter from a radio terminal, and acquiring the data through transmission of the data from the relay station, comprising a control unit operable to control a transmission processing unit to transmit, to the relay station, a second communication parameter used for transmission of the data to the radio base station from the relay station wherein the second communication parameter is correlated with the first communication parameter.

Preferably the correlation is realized by adding common identifying information respectively to said first communication parameter and said second communication parameter.

### BRIEF DESCRIPTION OF THE DRAWINGS

Fig. 1 is an exemplary illustration of a Radio communication system.

Fig. 2 is an exemplary illustration of a Radio base station 2.

Fig. 3 is an exemplary illustration of a Relay station 3.

Fig. 4 is an exemplary illustration of a Radio terminal 4.

Fig. 5 is an exemplary illustration of a Radio frame 1.

Fig. 6 is an exemplary illustration of a MAP data.

Fig. 7 is an exemplary illustration of a Radio frame 2.

Fig. 8 is an exemplary illustration of a Burst allocation information notifying sequence.

Fig. 9 is an exemplary illustration of a Burst allocation information 1.

Fig. 10 is an exemplary illustration of a Burst allocation information 2.

Fig. 11 is an exemplary illustration of a Burst allocation information 3.

Fig. 12 is an exemplary illustration of a Burst allocation information 4.

### DETAILED DESCRIPTION OF THE PREFERRED EMBODIMENTS

A preferred embodiment of the present invention will be explained with reference to accompanying drawings.

[a] First embodiment

Synchronization is required for a radio terminal to receive radio signals from a radio base station. Therefore, each radio base station transmits a signal for synchronization within its own service area. For example, the signal for synchronization (synchronization signal) can be formed including a preamble signal, which is a fixed pattern signal, and which is different in each radio base station. A radio terminal is capable of previously storing patterns of preamble signals of a plurality of kinds and is also capable of selecting the highest receiving quality (for example, a receiving level or CINR) among the patterns to select a radio base station as a communication partner.

In the case where OFDM (OFDMA), for example, is utilized as the radio system, a radio base station transmits data by using a plurality of sub-carriers by assigning data to be transmitted to each sub-carrier. In this case, the preamble can be transmitted through assignment thereof to each sub-carrier in the predetermined pattern. A radio terminal can set up synchronization to a radio base station which transmits a preamble of the highest quality by receiving a predetermined combination of sub-carriers and matching the received signal with a known preamble signal.

In addition, a radio base station transmits a signal in a frame format with reference to the synchronization signal. A radio terminal sets up frame synchronization by using the synchronization signal and receives mapping information (data for controlling the transmitting and receiving operations of a radio terminal: MAP data) of data with reference to the synchronization signal. For example the MAP data is transmitted right after the synchronization signal.

It is possible for the MAP data to include a communication parameter (timing, channel information and radio communication scheme (modulation scheme, coding scheme, coding rate, etc.)) for mapping data to a physical channel (downlink channel (channel to a radio terminal side from a radio base station)) and an uplink channel (channel to the radio base station side from the radio terminal side), and the radio frame has a format corresponding to the MAP data.

In addition, it is also possible to designate a physical channel for each radio terminal by designating the radio terminal by using the identifying information thereof. Of course, it is also possible to transmit the mapping information to a plurality of radio terminals (for example, all radio terminals within the area formed by a radio base station) for transmission and reception of a certain signal without any particular designation of a radio terminal.

A radio terminal receives radio signals with the downlink communication parameters (reception timing, receiving channel, radio communication scheme) designated by the MAP data (DL-MAP data) and transmits radio signals with the uplink communication parameters (transmission timing, transmitting channel, radio communication scheme) designated by the MAP data (UL-MAP data). Accordingly, communication with a radio base station can be realized directly (without relaying by any relay station). A communication parameter for controlling transmitting and receiving operations of a radio terminal is called here the communication parameter (B).

Meanwhile, a relay station sets up synchronization by receiving the synchronization signal from the radio base station. Moreover, the relay station receives the MAP data with reference to the synchronization signal and transmits transmitting data to radio terminals in accordance with the communication parameter (B) designated by the MAP data. The transmitting data to the radio terminals can be acquired using a communication link (MMR link) between the radio base station and the relay station. The relay station is also capable of previously acquiring the communication parameter (B) by using the MMR link.

The relay station receives radio signals addressed to the own station based on a communication parameter (downlink) designated by the MAP data or MMR link and transmits radio signals to be transmitted from the own station according to a communication parameter (uplink) designated by the MAP data. The communication parameter used to control transmitting and receiving operations of the relay station (namely, MMR communication link) is called the communication parameter (RB). Since the MMR link is used for communication between a radio base station and a relay station, the radio terminals are not required to receive signals of MMR link.

Moreover, the relay station does not re-transmit the MAP data to the radio terminals. The assumed reason is that the MAP data is more easily received by the radio terminals than the ordinary transmitting data (user data) by transmitting the MAP data with higher transmission power than transmission power of other signals or with a lower transmission rate than transmission rate other signals.

A radio terminal can receive transmitting data re-transmitted from the relay station by receiving the MAP data directly from the radio base station and receiving radio signals in accordance with the downlink communication parameter (B).

Therefore, the radio terminal can receive data directly from the radio base station and can also receive, from the relay station, data which has been received by the relay station from the radio base station.

A radio terminal only needs to conduct transmission and reception in accordance with the MAP data (communication parameter (B)) transmitted from the radio base station and is not required to recognize that transmission and reception of data is conducted via the relay station. Moreover, it is desirable for the relay station not to transfer (transmit) the synchronization signal which is periodically transmitted from the radio base station to the radio terminals. Namely, if it is assumed that the relay station transmits the synchronization signal, an event is likely assumed to occur in the radio terminal that the radio terminal is synchronized with the relay station by receiving the synchronization signal from the relay station. However the MAP data may not be found even if it is searched with reference to such synchronization signal. Moreover, the radio terminal is also required to recognize the existence of the other radio stations different from the radio base station.

As explained above, a plurality of the transmitting and receiving paths candidates for the radio terminals can be prepared by utilizing a relay station and these transmission paths can support radio communications of the radio terminals at the area near the boundaries of the areas of the radio base stations.

As explained above, the relay station transmits data received from the radio base station via the MMR link to the radio terminals. In the case where a plurality of radio terminals exist under the control (area) of the relay station, it is very effective that the radio terminals are grouped for radio communications with the equivalent radio communication scheme (modulation scheme (QPSK, 16AQAM, 64QAM, etc.), coding scheme (convolution coding, turbo coding, IRA coding, etc.), and coding rate (1/2, 1/3, etc.) and data for a group is transmitted as one data unit (burst data).

Therefore, a first burst data including the data to a first radio terminal group (including one or more radio terminals) and a second burst data including data to a second radio terminal group (including one or more radio terminals) are transmitted from the relay station to the radio terminals with the radio communication scheme corresponding to these burst data.

Detail structure and operation of each unit will be explained below with reference to drawing 1-7.

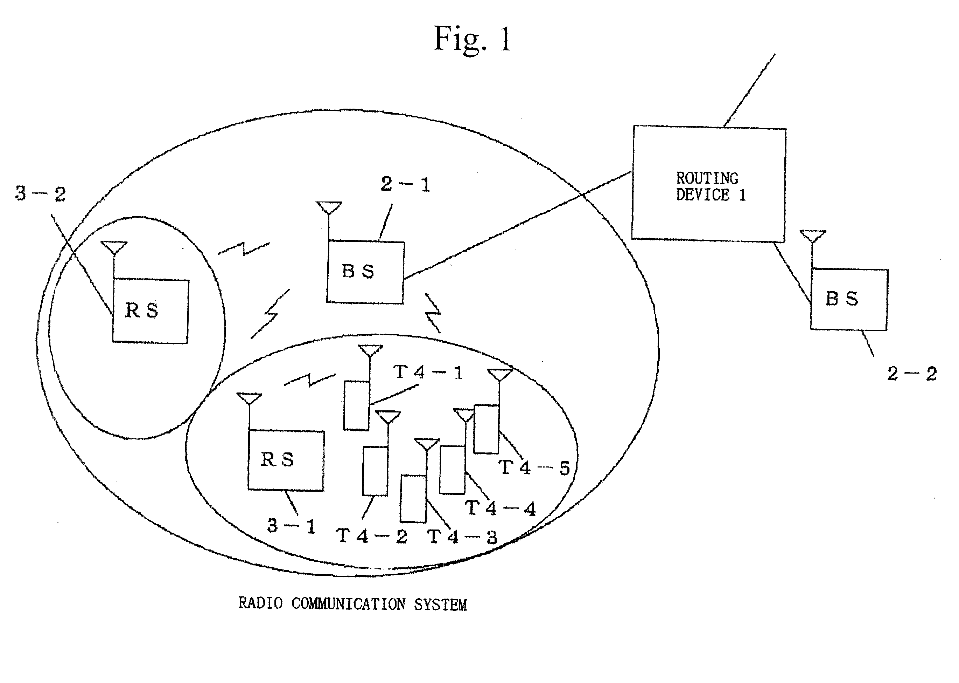

Fig. 1 shows a structure of a radio communication system in a first embodiment. In Fig. 1, reference numeral 1 denotes a routing device; 2, a radio base station (BS); 3, a relay station (RS); 4, a radio terminal (T), respectively. As the radio station 4, any of a so-called MS (Mobile Station) suitable for moving use and a radio device suitable for stationary use.

Here, a radio terminal 4 is capable of performing radio communication directly (via no relay station) with a radio base station 2 within the area of the radio base station 2 and is also making communication with a radio base station via the relay station 3 within the area of the relay station like the radio terminals T4-1 to T4-5 in the figure. One or more relay stations 3 may be provided within the area of radio base station 2 for radio communication with the radio terminals 4.

The radio base station 2 is connected with the routing device 1. The radio base station receives data from the radio terminal 4 and transmits such data to the routing device 1 and also to execute control for transmission of data received from the routing device 1 to the radio terminal 4. The routing device 1 is connected with a plurality of radio base stations to execute routing of data to the transmitting destination by transmitting the data received from the radio base station 2 to the other routing device or the other radio base station.

The radio base station 2 preferably transfers the data to the routing device 1 after conversion of data to the packet format. Here, it is desirable for the routing device 1 to provide a database which stores location registration areas of radio terminals (for example area information in which the radio terminal now exists, wherein the area may be formed by a plurality of service areas of radio base stations) and/or a service type of each radio terminal and the routing device 1 can acquire such data from this database as required at the time of routing process.

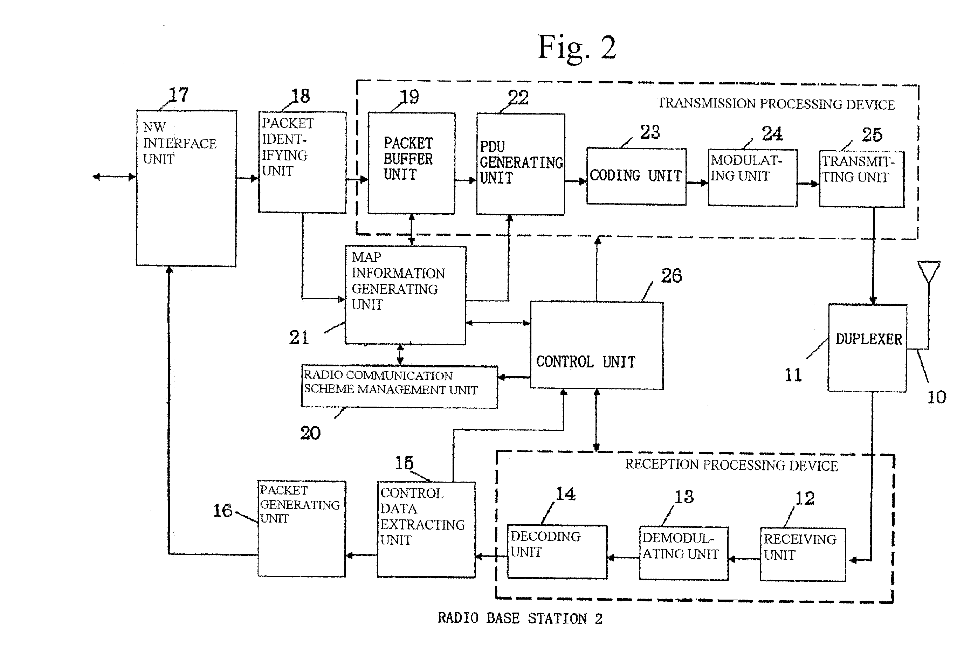

Next, a structure of the radio base station 2 will be explained in detail with reference to Fig. 2.

Fig. 2 shows a structure of the radio base station 2.

In Fig. 2, reference numeral 10 denotes an antenna for transmitting and receiving radio signals between the relay station 3 and the radio terminal 4; 11, a duplexer using in common the antenna 10 in the transmitting and receiving systems; 12, a receiving unit; 13, a demodulating unit for demodulating the receiving signals; 14, a decoding unit for decoding the demodulated receiving signals; 15, a control data extracting unit for extracting the control data from the decoded data and applying the control data to the control unit 26 and transferring the other data such as user data, etc. to a packet generating unit 16, and 16, the packet generating unit for transferring the data transferred from the control data extracting unit to an NW interface unit 17 as the packet data.

Reference numeral 17 denotes the interface unit to form an interface (here, packet communication is carried out) for the routing device 1; 18, a packet identifying unit for identifying an IP address included in a packet data received from the NW interface unit 17 to determine (acquire ID of the corresponding radio terminal 4 by storing correlation between the IP address data and ID of the radio terminal 4) a destination radio terminal 4 based on the IP address data and for acquiring the QOS (similarly correlation between QOS and the ID is stored) information corresponding to the ID to issue an band assigning request by sending the ID and QOS information to the MAP information generating unit 21 in order to store the packet data transferred from the NW interface unit 17 to a packet buffer unit 19.

Reference numeral 20 denotes a radio communication scheme management unit managing and storing, for every radio terminal, radio communication schemes used for radio communications between the relay station 3 and each radio terminal 4 (T4-1 to T4-5) and between a radio base station 2 and each radio terminal (T4-1 to T4-5). Moreover, this radio communication scheme management unit also administrates and stores, for each relay station, radio communication schemes used for radio communication between the radio base station 2 and each relay station (3-1 to 3-1) under the control of the radio base station.

It is desirable here that data stored here can be updated with the control unit 26. In this case, quality of receiving signals from the radio terminal 4 or relay station 4 is measured by the reception processing unit in the relay station or radio base station 2 and the radio communication scheme to be applied is changed on the basis of the result of measurement. For example, when receiving quality is high (higher than a threshold), the control unit 26 stores 64QAM, convolution coding, coding rate of 1/2 enabling high-speed radio transmission to the radio communication scheme management unit 20. When receiving quality is low (lower than the threshold), 16QAM enabling low-speed radio transmission, turbo coding system which is more powerful coding system and coding rate of 1/3 are stored to the radio communication scheme management unit 20.

When the device used for measurement is the relay station 3, result of measurement of receiving quality (radio communication scheme corresponding to result of measurement) can be acquired from the relay station 3 via the MMR link by the radio base station.

Reference numeral 21 denotes a MAP information generating unit for determining, upon reception of a band assigning request, a transmission line (determining a relay station for transfer) by searching a transmission paths by using the ID of the radio terminal 4 as the key in order to generate the MAP data in which the mapping area corresponding to QOS is set to any of the downlink data transmitting regions and instructs a PDU generating unit 22 to form a radio frame in accordance with the MAP data.

For example, the MAP information generating unit 21 acquires a burst data region (D(T)) as a region for transmitting user data to the radio terminal among the downlink data transmitting regions and generates MAP data including a communication parameter (B) which is required to designate the region and to receive the data stored in such region. The MAP information generating unit 21 also instructs a PDU generating unit 22 to transmit the generated MAP data and user data in respective transmission timings.

Meanwhile, when a communication path via the relay station 3-1 is selected, a burst data region (D(T)) as the region for transmitting user data to the radio terminal among the downlink data transmitting regions is acquired and the MAP data including the transmission parameter (B) required for designation of the region and reception of the data stored in such region is generated. Moreover, in order to transmit the user data to the relay station 3-1, a burst data region (D(MMR)) as the region for transmitting the user data to the radio relay station among the downlink data transmitting regions is acquired and the MAP data including the communication parameter (RB) required for designation of the region and reception of the data stored in such region is generated.

As explained above, the PDU generating unit 22 is instructed to transmit the generated MAP data and is also instructed to transmit the user data to the relay station 3 in the region designated by the communication parameter (RB).

Moreover, the MAP information generating unit 21 conducts grouping. First, the MAP information generating unit 21 refers, on the occasion of generating the MAP data, to the radio communication scheme applied between the relay station and the radio terminal for each radio terminal under the management of the radio communication scheme management unit 20. The MAP information generating unit 21 forms a group with a plurality of radio terminals to which an identical radio communication scheme can be applied. Namely, the MAP information generating unit 21 assigns one burst data region D(T) to each group and sets the region D(T). The MAP information generating unit 21 sets the MAP information to designate, to radio terminals belonging to the Nth group, corresponding region D(T) and a downlink radio communication parameter (B) which indicates a radio communication scheme corresponding to the Nth group.

Accordingly, the radio terminal(s) belonging to the Nth group receive a common burst data region D(T) on the basis of the communication parameter (B) received from the radio base station 2. The data stored in the burst data region is constituted in the format which may be separated with a header data or the like so that the radio terminals in the group can respectively extract the data of the own.

The user data destined to a plurality of radio terminals belonging to the group N to be transmitted from the relay station 2 in the burst data region D(T) is transmitted to the relay station 3 via the MMR link.

Reference numeral 22 denotes a PDU generating unit which generates PDU to store the MAP data and transmitting data to each region of the radio frames formed with reference to the synchronization signal (preamble) and to transmit these signal to a coding unit 23. Reference 23 denotes the coding unit; 24, a modulating unit; and 25, a transmitting unit. The PDU data is modulated sequentially after execution of the coding process such as an error correcting coding or the like and the modulated signals are then transmitted as radio signals from the transmitting unit 25 through the antenna 10.

Reference numeral 26 denotes a control unit for controlling the transmitting and receiving operations by controlling a transmission processing device and a reception processing device and also for instructing generation of the MAP data to the MAP information generating unit 21. Moreover, this control unit determines a radio communication scheme to be applied to the relay station 3 under the control thereof and executes the control of the radio communication scheme management unit 20 to administrate and store the result of determination. The radio communication scheme may be determined by recognizing a communication scheme notified from the relay station 3 via the MMR or may be determined by selecting a corresponding scheme on the basis of radio communication quality information transmitted from the relay station 3 for the radio base station 2.

Moreover, the control unit 26 controls the radio communication scheme managing unit 20 to administrate and store the determination result by determining a radio communication scheme applied to radio communication between the relay station 3-1 and each radio terminal 4. As a method of determination, the radio communication scheme may be determined by recognizing a communication scheme for each radio terminal 4 notified from the relay station 3 through the MMR or may be determined by selecting the corresponding scheme on the basis of radio communication quality information between the relay station 3 and the radio terminal 4 notified from the relay station 3.

For transmission to the relay station 3-1, the control unit 26 controls each unit of the transmission processing device to apply a communication scheme which is stored (managed) in the radio communication scheme management unit 20 as a communication scheme to be used for transmission to the relay station 3-1.

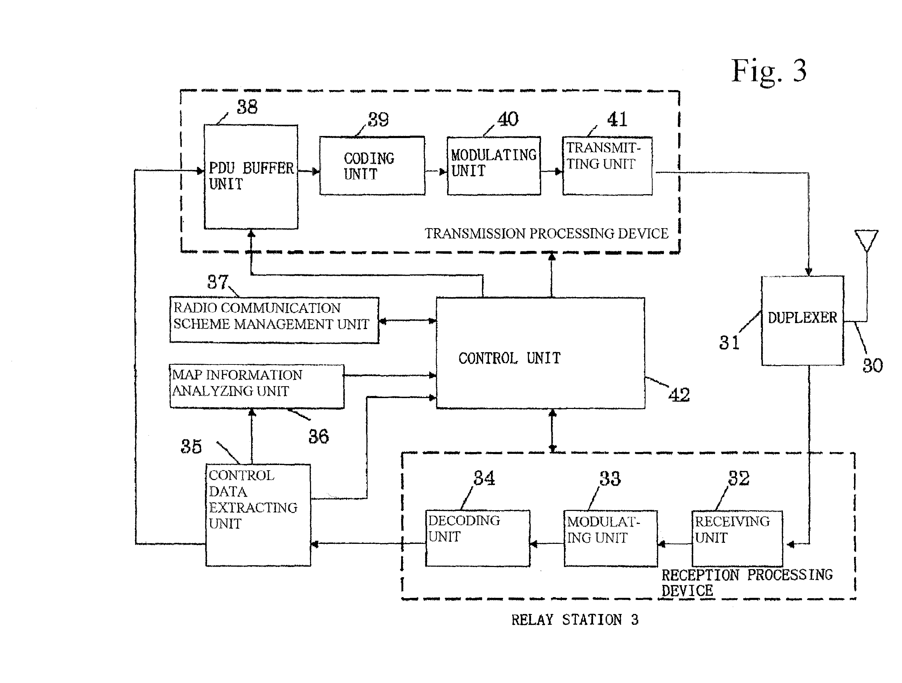

Fig. 3 is a diagram showing a structure of the relay station 3.

In Fig. 3, reference numeral 30 denotes an antenna for transmission and reception between the radio base station 2 and the radio terminal 4; 31, a duplexer for using in common the antenna 10 for transmission and reception; 32, a receiving unit; 33, a demodulating unit for demodulating the receiving signals; 34, a decoding unit for decoding the demodulated receiving signals; and 35, a control data extracting unit 35 for extracting the MAP data (received from the radio base station 2) from the decoded data and applying this data to a MAP information analyzing unit 36 and also transferring data addressed to the radio terminal 4 received from the radio base station 2 to a PDU buffer unit 38. Similarly, in the case where the radio signals are received from the radio terminal 4, the receiving data is transferred to the PDU buffer unit 38 for transmission to the radio base station 2.

Reference numeral 37 denotes a radio communication scheme management unit for administrating and storing a radio communication scheme used for radio communication with each radio terminal (T4-1 to T4-5) under the control thereof. Moreover, this management unit 37 administrates and stores a radio communication scheme used for radio communication with the radio base station 2. Management data in the radio communication scheme management unit 37 is synchronized with management data in the radio communication scheme management unit 20 through mutual communication by using the MMR link.

Numeral 38 denotes a PDU buffer. Since the control unit 42 acquires a reception timing and channel notified from the radio base station 2 to the radio terminal 4 by using a communication parameter (B) on the basis of

MAP data analyzed with the MAP information analyzing unit 36 or data received via the MMR link, data, to be received by the radio terminal 4, received from the radio base station 2 is transferred to a coding unit so that the radio terminal 4 can receive the data conforming to the communication parameter (B).

The data addressed to the radio terminal 4 is received through the communication link (MMR link) formed between the radio base station 2 and the relay station 3. Moreover, since an identifying information of the relay station 3 and the communication parameter (RB) are included in the MAP data transmitted from the radio base station 2, the relay station 3 receives a designated timing, channel and radio communication scheme to execute transmission of data or the like between the radio base station 2 and the relay station 3 (uplink direction is also defined by the communication parameter (RB) of the MAP data).

Numeral 39 denotes a coding unit and 40, a modulating unit, respectively. The transmitting data from the PDU buffer unit 38 is encoded and this encoded data is then transferred to the transmitting unit 41 after the modulating process to transmit the user data with the transmission timing and channel acquired from the MAP information analyzing unit 36.

Numeral 41 denotes a transmitting unit to transmit transmitting signals to the radio terminal 4 and radio base station 2 as radio signals via the antenna 30.

Numeral 42 denotes a control unit for controlling the transmission process device and reception processing device for transmission and reception with the transmission/reception timings, channel, and radio communication scheme acquired by the MAP information analyzing unit 36. Moreover, for transmission of the downlink burst to the radio terminal 4, the control unit 42 controls the transmission processing device to transmit burst data in accordance with a MAP data or a communication parameter notified through the MMR link.

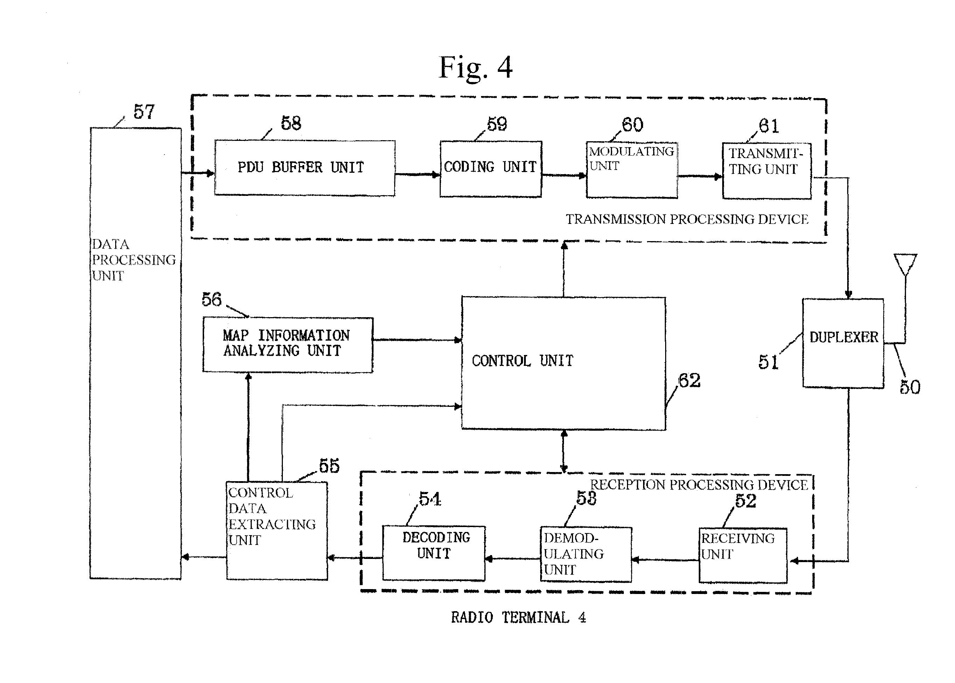

Fig. 4 shows a structure of the radio terminal 4.

In Fig. 4, numeral 50 denotes an antenna for transmitting and receiving radio signals between the relay station 3 and the radio base station 2; 51, a duplexer for common use of antenna 50 for transmission and reception; 52, a receiving unit; 53, a demodulating unit for demodulating the receiving signals; 54, a decoding unit for decoding the demodulated receiving signals; 55, a control data extracting unit for extracting control data from the decoded data, supplying the MAP data to the MAP information analyzing unit 56, and transferring the other data (user data) to a data processing unit 57.

Numeral 56 denotes a MAP information analyzing unit for analyzing the MAP data (downlink communication parameter (B)) received directly from the radio base station 2 and sending the result of analysis to a control unit 62. Namely, the transmission/reception timings of various data are notified to the control unit 62.

Numeral 57 denotes a data processing unit for displaying various data included in the receiving data and processing audio output of these data. Moreover, the data processing unit 57 applies user data requested to be transmitted to another device to a PDU buffer unit 58.

Numeral 58 denotes a PDU buffer for outputting stored data to a coding unit 59 in order to transmit the transmitting data from the data processing unit 57 in the transmission timing, transmitting channel and radio communication scheme designated by the MAP data (communication parameter (B)).

Numeral 59 denotes a coding unit and 60, a modulating unit. The transmitting data is encoded and modulated under the control of the control unit 62 to transmit transmitting data from the PDU buffer unit 58 in the transmission timing and transmitting channel designated by the MAP information.

The transmitting unit 61 transmits radio signals via the antenna 50.

The control unit 62 controls operations of the transmission processing device and reception processing device on the basis of the MAP data.

Next, an example of a radio frame format will be illustrated and a communication sequence in the system explained above will also be explained below in detail. Here, the radio frame format conforming to the IEEE Std802.16d, e is explained as an example but the embodiment is not limited thereto.

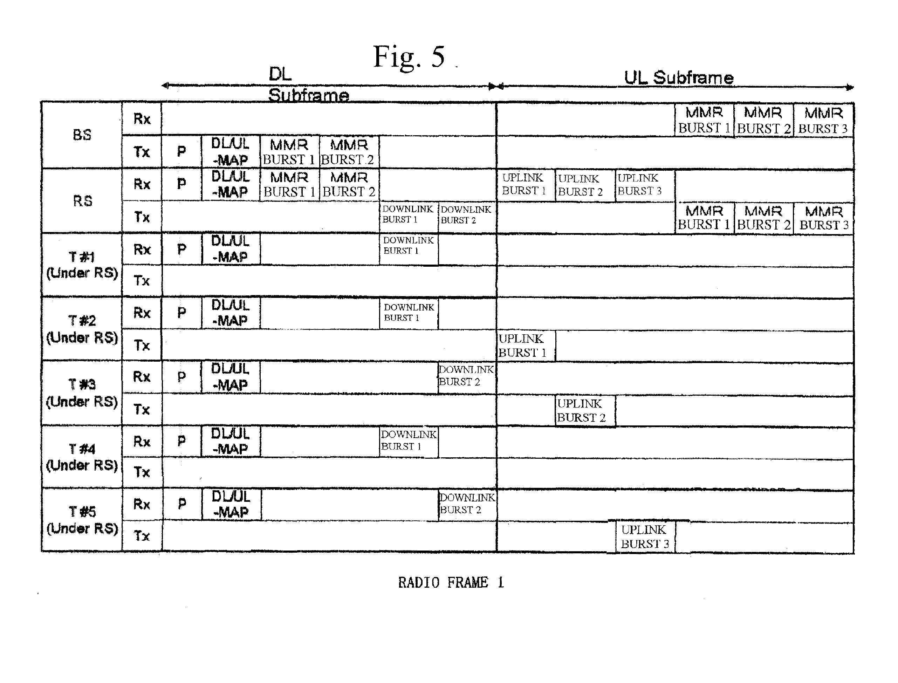

Fig. 5 shows an example of the frame formats of the radio signals transmitted and received among the radio base station, relay station, and radio terminal. BS2-1, BS3-1, T4-1 to T4-5 are arranged as shown in Fig. 1.

In Fig. 5, Tx and Rx respectively indicate transmission and reception. Therefore, BS2 sequentially transmits a preamble as the leading edge of frame, and DL/UL MAP, MMR burst 1, 2 (transmitting data to the relay station 3-1 from the radio base station 2).

The preamble is a predetermined pattern transmitted to enable synchronization of the radio terminal 4 and the relay station 3 with the radio base station 2. When the OFDM (OFDMA) is used, the signal of predetermined pattern is transmitted via each sub-channel.

The preamble is followed by the DL/UL MAP which is a region to store control data (MAP data) for notifying transmission/reception timings, transmitting/receiving channels and radio communication schemes to the relay station 3 and radio terminal 4.

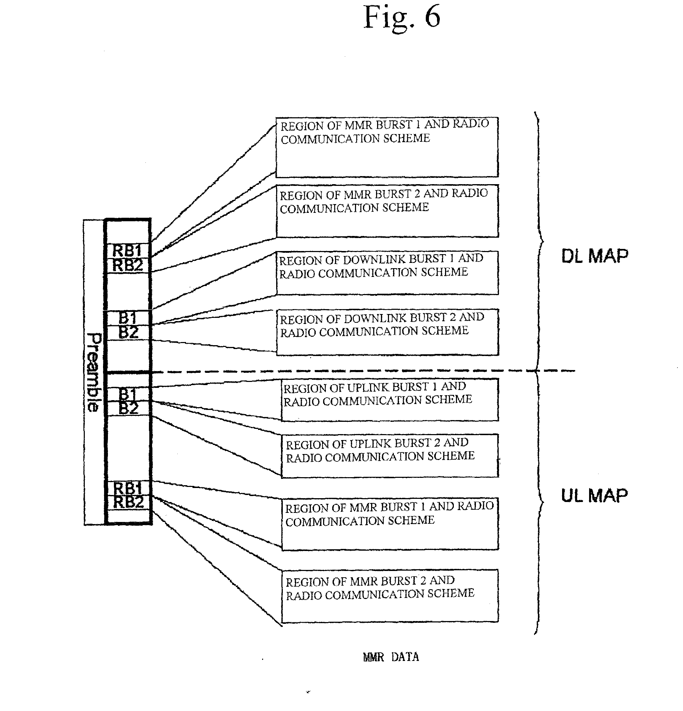

Fig. 6 shows an example of format of the MAP data which will be explained below in detail.

The MAP data includes DL MAP data for controlling the downlink radio communication and UL MAP data for controlling the uplink radio communication. The DL MAP data includes a region for storing the communication parameter (RB) and a region for storing the communication parameter (B).

Here, RB1, 2 are provided within the DL MAP data in order to set a couple of MMR burst regions (MMR burst 1, 2) in the D(MMR) as the downlink data transmitting region to the relay station 3-1 from the radio base station 2. RB1, RB2 respectively include communication parameters (RB) designating regions of MMR burst 1, 2 communication schemes used for reception.

Moreover, B1, 2 are provided within the DL MAP data in order to set a couple of burst regions to the D(T) as the data transmitting region of the downlink data to the radio terminal 4. B1, B2 respectively include communication parameter (B) designating the regions of downlink burst 1, 2 and radio communication schemes used for reception.

Above explanation will also be applied to the data transmission of the uplink.

In this frame format example, the period for transmission to RS, T from BS2, the period (D (MMR)) for transmission to RS from BS2, and the period (D(T)) for transmission to T from RS3-1 are respectively separated on time axis. Moreover, the uplink is separated from the downlink on time axis. Similarly, the transmission periods of T and RS are also separated respectively on time axis. This fact means that transmission and reception in each section are separated on the time division basis (the same frequency band may be used) but the other separating method such as frequency division or the like can also be used.

Returning to Fig. 5, the MMR burst 1, 2 respectively indicates transmitting region of data transmitted via the MMR link to the relay station 3 from the radio base station 2, while downlink burst 1, 2 respectively indicates transmitting region of data transmitted to the radio terminal 4 from the relay station 3.

Next, relationship with the grouping explained previously will be explained below.

The radio communication scheme management unit 20 of the radio base station 2 administrates and stores radio communication schemes for the relay station 3 and the radio terminals 4-1 to 4-5 under the control of the relation station 3. The MAP information generating unit 21 determines a data unit for transmission within a data transmitting region for transmission of data to the radio terminal from the relay station 3 by referring to contents of data stored. In this example, the MAP information generating unit 21 forms a first group with the radio terminals 4-1, 2, 4 in a same radio communication scheme and also forms a second group with the radio terminals 4-3, 5 in a same radio communication scheme.

The MAP information generating unit 21 generates, for the first group, the downlink burst 1 for transmission of user data to the radio terminals 4-1, 2, 4 and also generates, for the second group, the MAP data assigning the downlink burst 2 for user data to the radio terminals 4-3, 5 and applies these data to the PDU generating unit 22. For example, the MAP information generating unit 21 generates MAP data including the communication parameter (B1) required for reception of the downlink burst 1 and corresponding identifying information of the radio terminals 4-1, 2, 4 of the first group and then applies this MAP data to the PDU generating unit 22 and also generates MAP data including communication parameter (B2) required for reception of the downlink burst 2 and corresponding identifying information of the radio terminals 4-3, 5 of the second group and then applies this MAP data to the PDU generating unit 22.

On the other hand, the MAP information generating unit 21 conducts control to realize the similar grouping for the D(MMR) as the data transmitting region to the relay station 3 from the radio base station 2. That is, the MAP data is generated to include user data to the radio terminals 4-1, 2, 4 in the MMR burst 1 and user data to the radio terminals 4-3, 5 in the MMR burst 2 and is then applied to the PDU generating unit 22. Namely, the MAP data including communication parameter (RB1) required for reception of the MMR burst 1 including data to the radio terminals 4-1, 2, 4 of the first group is generated and is then applied to the PDU generating unit 22. Meanwhile, the MAP data including communication parameter (RB2) required for reception of the MMR burst 2 including data to the radio terminals 4-3, 5 of the second group is generated and is then applied to the PDU generating unit 22.

Accordingly, data to the radio terminals of the same group are stored in the MMR burst 1 and downlink burst 1, while data to the radio terminals of the same group are stored in the MMR burst 2 and downlink burst 2.

Preferably, data format such as arrangement sequence of user data is also set equivalently in the MMR burst and the downlink burst. Moreover, content of user data to each radio terminal is also set equivalently in the MMR burst and downlink burst.

Thereby, since the relay station 3 is capable of transmitting the user data received via the MMR link in the same group as the downlink burst, re-grouping is not required and processing load can be mitigated. In addition, when the data arrangement sequence is also equivalent, re-arrangement of data in the group is also not required and thereby processing load can also be mitigated.

Above process can also be applied to the uplink transmission of data.

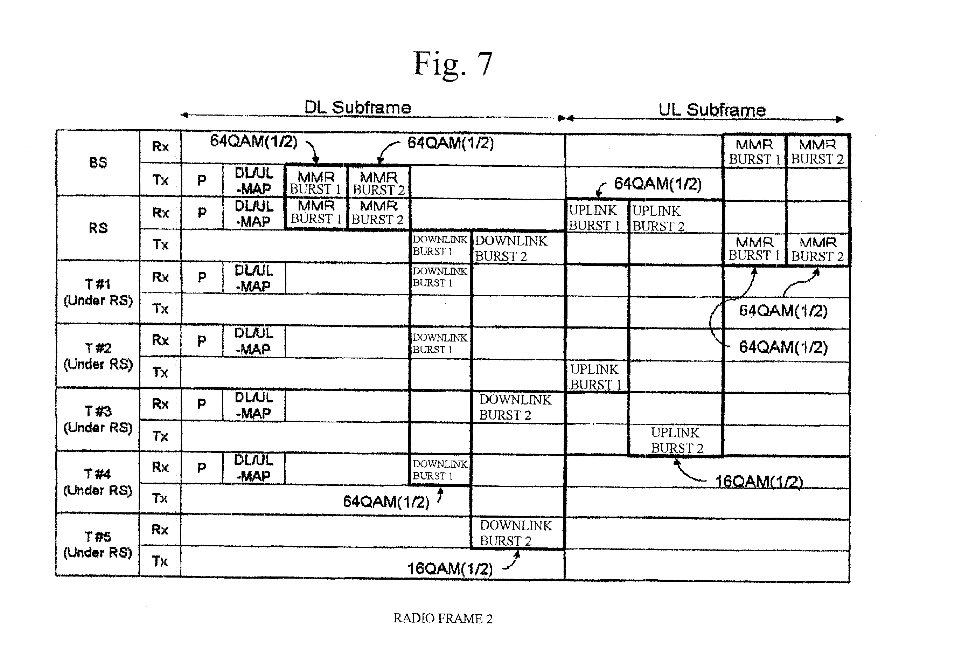

Next, an example of another radio frame format will be explained with reference to Fig. 7.

The radio communication scheme (particularly, modulating scheme) to be applied to each device is considered here. Namely, the 64 QAM is applied to the MMR link because the control unit 26 determines the radio environment is good (better than a threshold) from the result of measurement of the receiving quality for the MMR link.

On the other hand, for the downlink burst, the 64QAM is utilized between the relay station 3 and the radio terminals of the first group and the 16QAM is applied between the relay station 3 and the radio terminals of the second group.

It is also possible to utilize the equivalent radio communication scheme (particularly, modulating scheme) between the MMR burst and the downlink burst, in addition to the grouping and arrangement, but when the radio environment between the relay station and radio terminals is not good, the transmission rate between the radio base station and the relation station is likely to be lowered because of the bad environment between the relay station and radio terminals.

Therefore, it is preferable that the equivalent radio communication scheme is not introduced for the MMR burst and downlink burst and different schemes are utilized in accordance with the situation of each radio section.

[b]Second embodiment

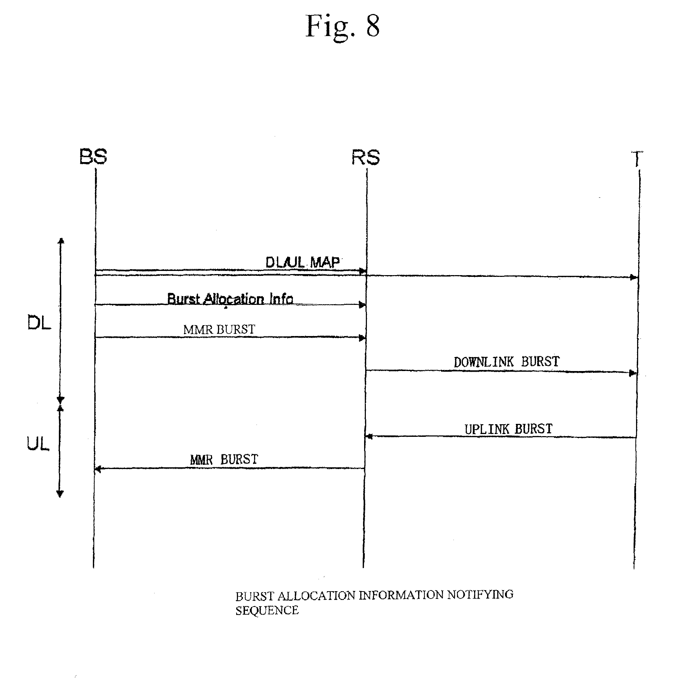

Next, how effectively assigning and storing data transmitted via the MMR link to a data region transmitted to the radio terminal from the relay station will be explained with reference to Fig. 8.

Fig. 8 shows the assignment information notifying sequence.

The radio base station 2 transmits a preamble and DL/UL MAP data.

Therefore, the relay station 3 and radio terminal 4 analyze the MAP information respectively by the MAP information analyzing units 36, 56. The control unit 42 of the relay station 3 acquires a communication parameter (RB) and also acquires user data to be transmitted to the radio terminal 4 as the MMR burst by controlling the reception processing device to conduct a receiving operation conforming to the communication parameter (RB).

On the other hand, the control unit 62 of the radio terminal 4 acquires a communication parameter (B) and prepares for control of the reception processing device to conduct a receiving operation conforming to the communication parameter (B).

However, the relay station 3 is requested to determine how transmit as the downlink burst user data to the radio terminal 4 acquired by the MMR burst. That is, a communication parameter (B) can be acquired by receiving the MAP data transmitted to the radio terminal 4, but it must also be recognized that any of data received by the MMR link must be transmitted in accordance with the communication parameter (B).

Therefore, in this embodiment, burst allocation information is transmitted to the relay station from the radio base station 2 via the MMR link.

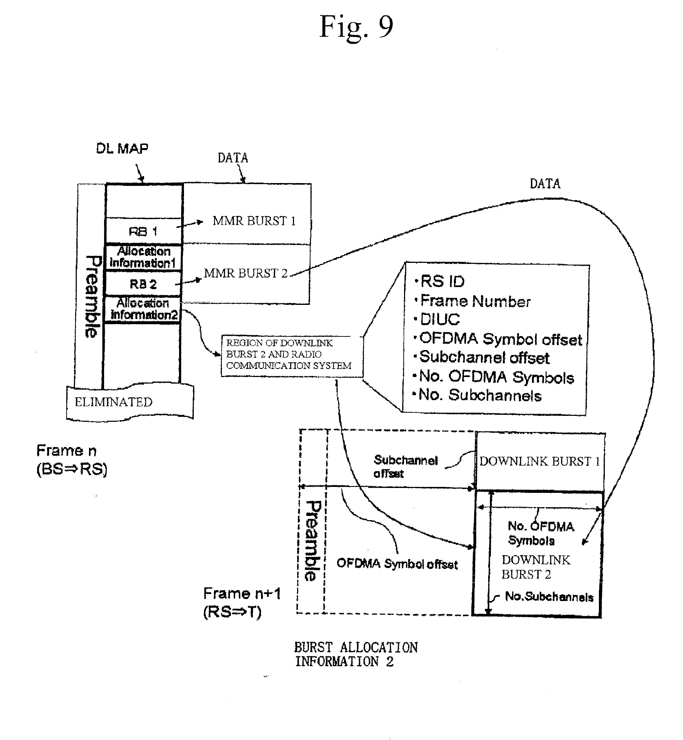

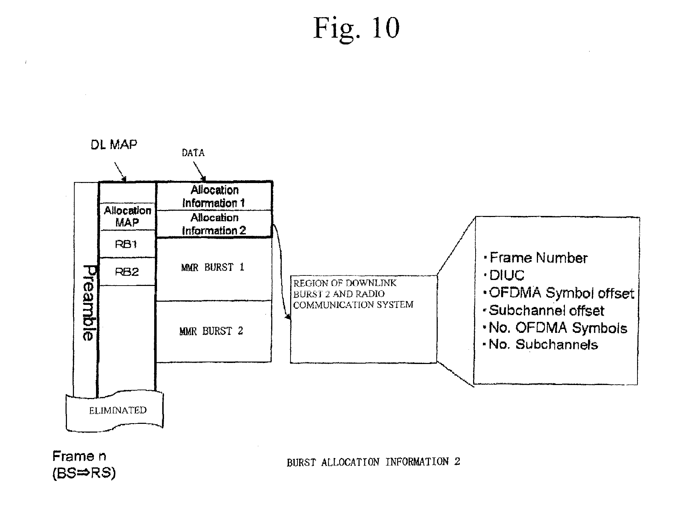

An example of the burst allocation information will be explained with reference to Fig. 9 and Fig. 10.

Fig. 9 shows an example of first burst allocation information.

The MAP information generating unit 21 of the radio base station 2 generates communication parameters RB1, 2 to notify transmission to the relay station 3 in the MMR bursts 1, 2. Namely, the communication parameters (RB1, 2) include region designating information and radio communication schemes required for receiving operation of the MMR bursts 1, 2.

Moreover, the MAP information generating unit 21 allocates the burst allocation information corresponding (allocated adjacently here) to each communication parameter RB within the DL MAP. The burst allocation information indicates in which region and with which radio communication scheme the data to be transmitted by the MMR burst should be transmitted (set equivalently as the content notified to the radio terminal 4 by the communication parameter (B)).

The burst allocation information includes, for example, the RS ID as the identifying information of the relay station 3, number of frame in which transmission should be conducted, DIUC indicating a radio communication scheme and OFDMA parameter (OFDMA Symbol offset, Sub-channel offset, No. of OFDMA Symbols, and No. of Sub-channels) required for employment of OFDMA system.

As shown in Fig. 9, the OFMDA Symbol offset in the OFDMA parameter indicates offset in the time axis direction of the radio frame and the Subchannel offset indicates offset in the frequency axis of the radio frame. Moreover, the No. (of) OFDMA Symbols indicate the number of symbols in the time axis direction from the OFDMA Symbol offset, while the No. (of) Sub-channels indicate the number of sub-channels in the frequency axis direction from the Sub-channel offset. That is, the OFDMA parameter indicates the region of radio frame for transmission to the radio terminal 4.

Accordingly, the MAP information analyzing unit 36 of the relay station 3-1 also analyzes the burst allocation information when the RS ID indicates the relay station 3-1, acquires the communication parameter (including the same content as the communication parameter (B) transmitted to the radio terminal 4) indicating how the user data included in the present MMR burst received in accordance with the corresponding communication parameter RB should be transmitted, and then applies this communication parameter to the control unit 42.

Therefore, the control unit 42 can relay adequately the user data to the radio terminal 4 which conducts receiving operation in accordance with the communication parameter (B) by controlling the transmission processing device to transmit radio signals in accordance with a communication parameter included in the burst allocation information As the burst allocation information, pointer information indicating a region of the communication parameter (B) notified to the radio terminal 4 by the radio base station 2 and the identifying information of the relay station which should receive the burst allocation information may be used. This pointer sets up correspondence between each MMR burst and the communication parameter (B) in the relay station B in order to conduct the transmission in the adequate transmission timing.

Fig. 10 shows an example of a second burst allocation information).

Content of this information is identical to that in Fig. 9. However, in this example, the burst allocation information is not transmitted within the MAP data but in corporation with the MMR burst.

An allocation MAP is stored in the MAP data and therefore which region (region for burst allocation information) should be received with which radio communication scheme is notified to the MAP information analyzing unit 36 of the relay station 3.

Moreover, the burst allocation information is constituted with the relay station identifying information RS ID and the communication parameter (region, radio communication scheme) for the downlink burst to be transmitted.

The burst allocation information is formed in the external side of the MMR burst in this example, but the allocation MAP can be eliminated by forming such information at the internal side of the MMR burst. Moreover, the communication parameter (B) can be used in common with the radio terminal 4 by including a pointer, indicating the region of the corresponding communication parameter (B) included in the MAP data, into the MMR burst.

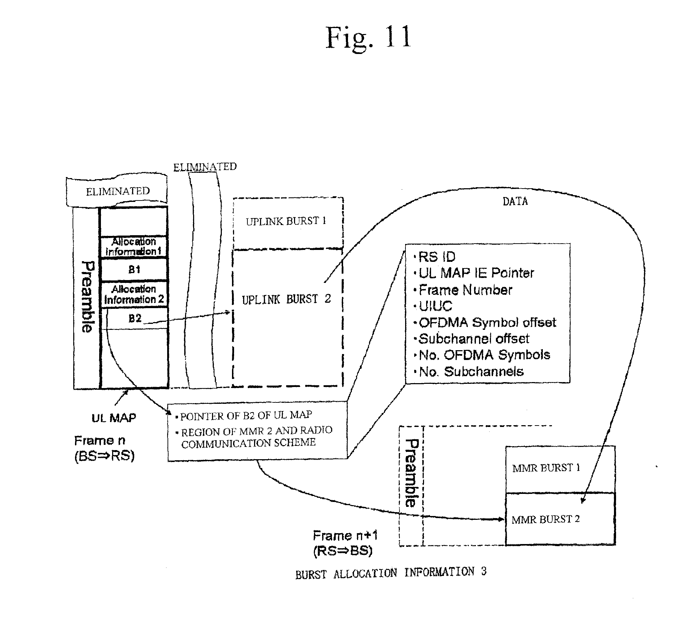

Fig. 11 shows an example of a third burst allocation information.

The MAP information generating unit 21 of the radio base station 2 includes, within the UL MAP, the burst allocation information. The burst allocation information suggests the pointer indicating the region of the communication parameter (B) of UP MAP and region and radio communication scheme for transmitting the data received in accordance with such pointer via the MMR link.

In more concrete, the burst allocation information includes the RS ID as the identifying information of the relay station 3, pointer indicating the region in which the corresponding communication parameter (B) of the UL MAP, number of frame in which transmission should be conducted, UNIC indicating the radio communication scheme, OFDMA parameter required for employing the OFDMA system (OFDMA Symbol offset Sub-channel offset, No, (of) OFDMA symbol, and No. (of) Sub-channels).

Therefore, the MAP information analyzing unit 36 of the relay station 3 receives the burst allocation information, acquires the corresponding communication parameter (B) in accordance with the pointer included in this burst allocation information and then applies this communication parameter (B) to the control unit 42. Accordingly, the control unit 42 receives user data from the radio terminal 4 by controlling the reception processing device to conduct a receiving operation in accordance with the communication parameter (B).

Thereafter, the control unit 42 transmits the user data acquired from the radio terminal 4 to the radio base station 2 via the MMR link in accordance with the frame number and radio communication scheme designated with the burst allocation information. Accordingly, the radio base station 2 is capable of acquiring the user data transmitted by the transmitting operation designated by the communication parameter (B) of the MAP data via the MMR link in the desired timing.
Here, information indicating a region of the corresponding communication parameter (B) may be included in the communication parameter (RB), which is MAP data for the uplink of the MMR link, as the burst allocation information.

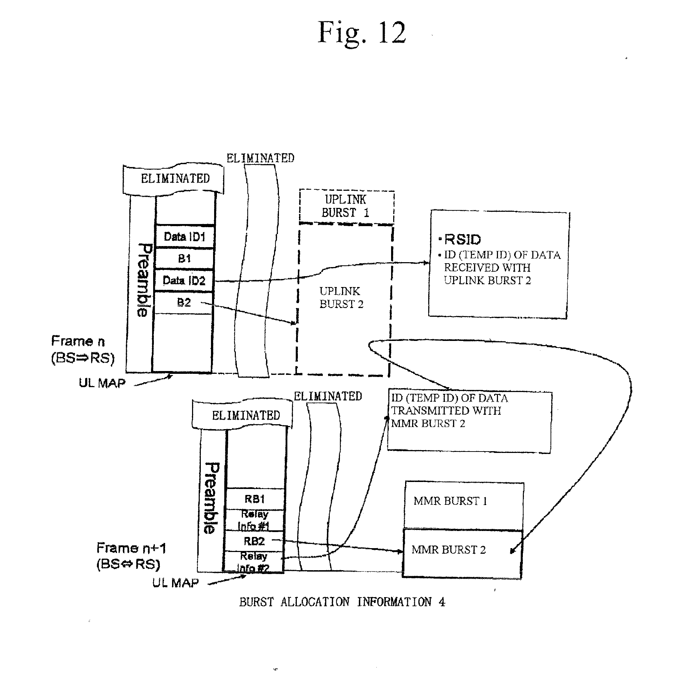

Fig. 12 show s an example of a fourth burst allocation information.

In this example, the RS ID and the ID (Temp ID)

applied to the data received are used as the burst allocation information.

The MAP information analyzing unit 36 of the relay station 3 receives the UL MAP and acquires the communication parameter (B) and the corresponding burst allocation information. The burst allocation information does not require the pointer which indicates a region of the communication parameter (B) through allocation of the burst allocation information in the predetermined allocating relationship (here, adjacent to the communication parameter) to the communication parameter (B).

The control unit 42 having acquired the communication parameter (B) from the MAP information analyzing unit 36 controls the reception processing device in accordance with this parameter to receive the user data transmitted from the radio terminal 4.
Moreover, the control unit 43 stores the receiving user data to the PDU buffer unit 38 corresponding to the ID included in the corresponding burst allocation information.

The relay station 3 thereafter receives the communication parameter (RB) of the UL MAP data and the burst allocation information (Relay Info) transmitted in relation with the communication parameter (RB).

Here, the burst allocation information includes the ID of the data to be transmitted with the MMR link (MMR burst).

Accordingly, the control unit 42 searches by using an ID designated by the Relay Info as a key, data which corresponds to the ID and controls the transmission processing device to transmit the searched data in the transmission timing, channel, and radio communication scheme designated by the communication parameter (RB).

Accordingly, the radio base station 2 can receive the user data from the radio terminal 4 via the MMR link in the format designated by the MAP data.

According to the embodiments mentioned above, communication between a radio base station and a relay station taking the communication between a relay station and a radio terminal into account can be realized.

Moreover, according to the embodiments mentioned above, correspondence between data transmitted and received between a radio base station and a relay station and data transmitted and received between a relay station and a radio terminal can be attained adequately.

In any of the above aspects, the various features may be implemented in hardware, or as software modules running on one or more processors. Features of one aspect may be applied to any of the other aspects.

The invention also provides a computer program or a computer program product for carrying out any of he methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A radio base station operable to transmit data to a plurality of radio terminals via a relay station, which transmits a first data unit by applying a common radio communication scheme to the first data unit including data for a plurality of the radio terminals, comprising:
a control unit operable to generate a second data unit including said data for said plurality of the radio terminals and to control a transmission processing unit to transmit the second data unit to the relay station.

2. The radio base station of claim 1 wherein the radio communication scheme is any of a modulation scheme, a coding scheme, and a coding rate.

3. The radio base station of claim 1 or 2 wherein the control unit controls a radio communication scheme for transmission of said first data unit independently of a radio communication scheme for transmission of said second data unit.

4. The radio base station of any of the preceding claims wherein said first data unit and said second data unit have an identical content or format.

5. A radio base station operable to transmit a first communication parameter to a radio terminal and to transmit data, to be received by the radio terminal based on the communication parameter, to a relay station, comprising:
a control unit operable to control transmission of second communication parameter of the same content as the first communication parameter to the relay station, wherein the second communication parameter is correlated with the data or to control transmission of information for identifying the first communication parameter wherein the information is correlated with the data.

6. A radio base station operable to transmit a first communication parameter, allowing a relay station to receive data transmitted on a basis of the first parameter from a radio terminal, and to acquire the data through transmission of the data from the relay station, comprising:
a control unit operable to control a transmission processing unit to transmit, to the relay station, a second communication parameter used for transmission of the data to the radio base station from the relay station wherein the second communication parameter is correlated with the first communication parameter.

7. The radio base station of claim 6 wherein the correlation is realized by adding common identifying information respectively to said first communication parameter and said second communication parameter.

8. A method of transmitting data comprising:
transmitting data from a radio base station to a plurality of radio terminals via a relay station which transmits a first data unit by applying a common radio communication scheme to the first data unit including data to a plurality of the radio terminals;
generating a second data unit including said data to said plurality of the radio terminals; and
transmitting the second data unit to the relay station.

9. The method of claim 8 wherein the radio communication scheme is any of a modulation scheme, a coding scheme, and a coding rate.

10. The method of claim 8 or 9 further comprising the step of controlling a radio communication scheme for transmission of said first data unit independently of a radio communication scheme for transmission of said second data unit.

11. The method of claim 8, 9 or 10 wherein said first data unit and said second data unit have an identical content or format.

12. A transmitting method comprising:
transmitting a first communication parameter from a radio base station to a radio terminal;
transmitting data, to be received by the radio terminal based on the communication parameter, to a relay station; and
controlling transmission of a second communication parameter of a same content as the first communication parameter to the relay station, wherein the second communication parameter is correlated with the data or to control transmission of information for identifying the first communication parameter wherein the information is correlated with the data.

13. A transmitting method comprising:
transmitting a first communication parameter from a radio base station;
allowing a relay station to receive data transmitted on a basis of the first parameter from a radio terminal;
acquiring the data through transmission of the data from the relay station; and
controlling a transmission processing unit to transmit, to the relay station, a second communication parameter used for transmission of the data to the radio base station from the relay station wherein the second communication parameter is correlated with the first communication parameter.

14. The method of claim 13 wherein the correlation is realized by adding common identifying information respectively to said first communication parameter and said second communication parameter.
